# EUROPEAN PATENT APPLICATION

(11) **EP 2 039 955 A2**
(43) Date of publication of application: **25.03.2009**
(21) Application number: 08015859.5
(22) Date of filing: 09.09.2008
(51) Int. Cl.: F16F 1/38, F16F 13/10

(54) **Vibration damping device**

(30) Priority: 21.09.2007 JP 2007246189
(71) Applicant: TOKAI RUBBER INDUSTRIES, LTD., Komaki-shi, Aichi, 485-8550 (JP)
(72) Inventor: Yoshii, Noriaki, Komaki-shi, Aichi 485-8550 (JP); Kawai, Motohiro, Komaki-shi, Aichi 485-8550 (JP)
(74) Representative: Kuhnen & Wacker

(57) **Abstract**

A vibration damping device (10, 122) including: a main rubber elastic body (16) connecting a first and a second mounting members (12, 14); a fluid-filled unit (20) having a tubular housing (38) closed off by a rubber elastic wall (46) and a flexible film (56) for providing therein a fluid chamber filled with a non-compressible fluid, and a partition member (62) positioned within the fluid chamber to form on a first side thereof a primary fluid chamber (88) partly defined by the rubber elastic wall (46), and on the other side thereof a secondary fluid chamber (90) partially defined by the flexible film (56), with these chambers communicating through an orifice passage (92); and a rigid piston member (94, 124, 130). Upon input of vibration across the first and second mounting members (12, 14), pressure fluctuations is exerted on the primary fluid chamber (88) through elastic deformation of the rubber elastic wall (46) of the fluid-filled unit (20) induced through pushing by the contacting member (24) via the piston member (94, 124, 130).

## Description

### BACKGROUND OF THE INVENTION

### 1. Field of the Invention

The present invention relates in general to a vibration damping device adapted for use as an engine mount in an automobile for example, and more particularly to a vibration damping device of fluid filled type that utilizes vibration damping action produced on the basis of flow action of a fluid that fills the interior.

### 2. Description of the Related Art

In the past there have been proposed vibration damping devices having a structure in which a first mounting member that is mounted on one component of a vibration transmission system is positioned spaced apart in relation to a second mounting member that is mounted on the other component of the vibration transmission system, with the first mounting member and the second mounting member linked to one another by a main rubber elastic body. For example, there has been proposed a vibration damping device of tubular design having a structure in which an inner shaft member mounted on one component of a vibration transmission system is encircled by an outer tubular member positioned spaced apart therefrom and mounted on the other component of the vibration transmission system, with the inner shaft member and the outer tubular member being linked to one another.

In an effort to further improve vibration damping capabilities, there have also been proposed vibration damping devices of fluid filled type in which the interior of the vibration damping device is filled with a non-compressible fluid, with vibration damping action being produced on the basis of flow action of the fluid sealed therein. For example, one such fluid filled vibration damping device, disclosed inter alia in Japanese Unexamined Patent Publication No. JP-A-2006-266438, has a structure in which an inner shaft member and a middle sleeve positioned spaced apart to the outside thereof are connected to one another by a main rubber elastic body; the middle sleeve is provided with a plurality of window portions, and a plurality of pocket portions formed in the main rubber elastic body open peripherally outward through these window portions; an outer tubular member is externally fitted and fixed to the middle sleeve so that the pocket portions are covered fluid-tightly by the outer tubular member, thereby forming a plurality of fluid chambers filled with a noncompressible fluid; and an orifice passage is provided interconnecting the plurality of fluid chambers.

Generally, in vibration damping devices of fluid filled type, since the vibration damping effect is produced utilizing flow action of fluid made to flow through an orifice passage it is preferable for the device to be provided with a fluid chamber of ample capacity. Meanwhile, in order for the main rubber elastic body which links the inner shaft member and the outer tubular member (i.e. the first mounting member and the second mounting member) to be endowed with the necessary spring characteristics and with sufficient endurance with regard to repeatedly input vibration, it must be formed with sufficient rubber volume.

With a structure like that of the fluid filled, tubular vibration damping device disclosed in JP-A-2006-266438, in which the main rubber elastic body is disposed and the fluid chamber is formed in a zone defined in the diametrical direction between the inner shaft member and the outer tubular member, it will be difficult in some instances to ensure sufficiently large capacity of the fluid chambers, with the resultant anxiety of difficulty in achieving either the required vibration damping capability or the required durability. In particular, given the increasingly smaller available vibration damping installation spaces in recent devices, reduction of the size of the vibration damping device per se has become an important issue, and this has made it more difficult to ensure a zone of sufficient size in the diametrical direction between the inner shaft member and the outer tubular member through increases in the diameter of the outer tubular member.

In this regard, in co-pending Japanese Patent Application No. 2007-70754 (not yet published), the Assignee proposed a vibration damping device in which an inner shaft member and an outer tubular member positioned spaced apart to outside peripheral side of the inner shaft member are connected to one another by a main rubber elastic body, with the inner shaft member being mounted on one component of a vibration transmission system and the outer tubular member being mounted on the other component of the vibration transmission system so as to install the device between the components of the vibration transmission system. Therefore, the vibration damping device includes a fluid-filled unit having a structure in which a first opening of a tubular housing is closed off by a rubber elastic wall while the other opening of the tubular housing is closed off by a flexible film, thereby defining between the opposing faces of the rubber elastic wall and the flexible film a fluid chamber that is filled with a non-compressible fluid. In this vibration damping device, a partition member positioned within the fluid chamber and bifurcating the fluid chamber is supported on the tubular housing, thereby forming to a first side of the partition member a primary fluid chamber whose wall is partly defined by the rubber elastic wall, and forming to the other side of the partition member a secondary fluid chamber whose wall is partly defined by the flexible film, with the primary fluid chamber and the secondary fluid chamber communicating with one another through an orifice passage. Also, in this vibration damping device, an open window is formed at the perimeter of the outer tubular member, and the tubular housing of the fluid-filled unit is anchored to the outer tubular member, whereby the rubber elastic wall of the fluid-filled unit contacts the inner shaft member through the open window, and at times of input of vibration in the axis-perpendicular direction across the inner shaft member and the outer tubular member, pressure fluctuations will be exerted on the primary fluid chamber through elastic deformation of the rubber elastic wall of the fluid-filled unit induced by pressing force of the inner shaft member.

In the vibration damping device having the structure described above, the fluid-filled unit filled with the non-compressible fluid is constituted as a separate element for external attachment to the outer tubular member, thus making it possible to both ensure ample volume in the fluid chambers, while ensuring adequate rubber volume of the main rubber elastic body as well.

However, additional research conducted by the inventors in relation to the vibration damping device having the structure described above has shown that merely subjecting the rubber elastic wall of the fluid-filled unit to pressing force of the inner shaft member does not in and of itself ensure adequate freedom in tuning of damping characteristics.

### SUMMARY OF THE INVENTION

It is therefore one object of this invention to provide a vibration damping device of novel structure that can afford adequate freedom in tuning of damping characteristics.

The above and/or optional objects of this invention may be attained according to at least one of the following modes of the invention. The following modes and/or elements employed in each mode of the invention may be adopted at any possible optional combinations.

The principle of the present invention provide a vibration damping device having a first mounting member to be mounted to one component of a vibration transmission system, a second mounting member to be mounted to another component of the vibration transmission system, a main rubber elastic body elastically connecting the first mounting member and the second mounting member being positioned spaced apart, the vibration damping device being characterized in that: a fluid-filled unit has a structure in which a first opening of a tubular housing is closed off by a rubber elastic wall while another opening of the tubular housing is closed off by a flexible film thereby defining between opposing faces of the rubber elastic wall and the flexible film a fluid chamber that is filled with a non-compressible fluid, and in which a partition member positioned within the fluid chamber and bifurcating the fluid chamber is supported on the tubular housing thereby forming to a first side of the partition member a primary fluid chamber whose wall is partly defined by the rubber elastic wall, and forming to the other side of the partition member a secondary fluid chamber whose wall is partly defined by the flexible film, with the primary fluid chamber and the secondary fluid chamber communicating with each other through an orifice passage, the tubular housing of the fluid-filled unit being anchored to either the first mounting member or the second mounting member, while the rubber elastic wall of the fluid-filled unit being positioned in opposition to a contacting member of the other of the first mounting member and the second mounting member; a rigid piston member constituted as a separate element is disposed between opposing faces of the contacting member and the rubber elastic wall in a nonattached state against the contacting member and the rubber elastic wall so as to be displaceable relative to the contacting member in a direction of opposition of the contacting member and the rubber elastic wall; and upon input of vibration across the first mounting member and the second mounting member, pressure fluctuations is exerted on the primary fluid chamber through elastic deformation of the rubber elastic wall of the fluid-filled unit induced through pushing by the contacting member via the piston member.

In the vibration damping device having the above structure according to the present invention, when vibration is input across the first mounting member and the second mounting member, the rubber elastic wall of the fluid-filled, pushed by the contacting member via the piston member, will undergo elastic deformation thereby making it possible, through appropriate modification of the shape and size of the piston member, to change the size of the zone that undergoes elastic deformation at times of input of vibration across the first mounting member and the second mounting member. It will be possible thereby to change the magnitude of the pressure fluctuations exerted on the primary fluid chamber. As a result, it will be possible to modify damping characteristics which are based on flow action of fluid induced to flow through the orifice passage.

Consequently, in the vibration damping device according to the present invention, the damping characteristics which are based on flow action of fluid induced to flow through the orifice passage can be modified through a simple structural modification, namely, modification of the shape and/or size of the piston member. Thus, in the vibration damping device according to the present invention, it is possible both to ensure a high degree of freedom in tuning of the damping characteristics, and to rapidly adapt to changes in required vibration damping characteristics and so on.

In particular, the present invention makes it possible to prepare a number of different types of fluid-filled unit having different vibration damping characteristics and to then employ a fluid-filled unit selected from among these different prepared fluid-filled units according to capabilities required for a particular application. Thus, it will be possible to employ some parts in common for a number of vibration damping devices having different vibration damping characteristics, and thus to ensure a higher degree of freedom in tuning of damping characteristics.

Moreover, in the present invention, the piston member is constituted as a separate element from the rubber elastic wall and the main rubber elastic body. Therefore, during vulcanization molding of the rubber elastic wall and the main rubber elastic body, it will not be necessary to subject the piston member to a pretreatment for vulcanization bonding or to set the piston member at a specific position within the mold cavity for the rubber elastic wall or the main rubber elastic body. This makes it possible to simplify the process of molding the rubber elastic wall and the main rubber elastic body, and hence to simplify production of the vibration damping device.

Furthermore, in the present invention, since the piston member is constituted as a separate element from the rubber elastic wall, the rubber elastic wall will not be subjected to the action of constraint by the piston member during input of vibration. It will be possible thereby to avoid stress concentration at the contact face of the rubber elastic wall with the piston member during input of vibration. As a result, it will be possible to impart outstanding durability to the rubber elastic wall.

Moreover, in the present invention, contact of the piston member against the contacting member may take place through direct contact of the piston member against the contacting member, or through indirect contact via some other intervening member such as a main rubber elastic body covering the contacting member, for example.

According to one preferred mode of the invention, wherein the first mounting member comprises an inner shaft member, the second mounting member comprises an outer tubular member spaced apart peripherally outward from the inner shaft member, the tubular housing of the fluid-filled unit is affixed fitting against an open window that has been formed at a perimeter of the outer tubular member, and the rubber elastic wall of the fluid-filled unit is disposed in contact with the inner shaft member via the piston member so that upon input of vibration in the axis-perpendicular direction across in the inner shaft member and the outer tubular member, pressure fluctuations is exerted on the primary fluid chamber through elastic deformation of the rubber elastic wall of the fluid-filled unit induced by pressing force of the inner shaft member via the contacting member.

According to another preferred form of the invention, the piston member has a plate portion of flat shape and a contacting projection disposed at an outside peripheral edge of the plate portion, with the contacting projection disposed in contact against the rubber elastic wall. With this arrangement, despite the rubber elastic wall having a tapered portion that progressively tapers towards the axially outward direction of the tubular housing moving in the diametrically inward direction of the tubular housing, it will be possible to position the contacting projection so that it presses against the rubber elastic wall in proximity to the outside peripheral edge (the edge portion on the tubular housing side), i.e. in proximity to the basal end of the rubber elastic wall. As a result, it will be possible to enlarge the zone of the rubber elastic wall that undergoes elastic deformation due to pushing by the piston member, and to further improve the freedom in tuning of damping characteristics.

According to yet another preferred mode, the piston member having the above structure is employed, the plate portion is formed of a metal plate, and the contacting projection is formed of a rubber projection that has been vulcanization bonded to the plate portion. It will be possible thereby to make it more difficult for the area of the rubber elastic wall contacted by the contacting projection to be damaged through contact by the contacting projection. The durability of the rubber elastic wall can be improved as a result.

In the present invention, it is preferable to provide a guide mechanism for regulating the direction of displacement of the piston member. This will stabilize displacement of the piston member, making it possible to stabilize the direction of pressing force of the rubber elastic wall by the piston member.

### BRIEF DESCRIPTION OF THE DRAWINGS

The foregoing and/or other objects features and advantages of the invention will become more apparent from the following description of a preferred embodiment with reference to the accompanying drawings in which like reference numerals designate like elements and wherein:
FIG. 1 is a front elevational view of a vibration damping device in the form of an automotive engine mount according to one embodiment of the present invention;
FIG. 2 is a cross sectional view of the engine mount of FIG. 1, taken along line 2-2 of FIG. 3;
FIG. 3 is a cross sectional view of the engine mount of FIG. 1, taken along line 3-3 of FIG. 2;
FIG. 4 is a vertical cross sectional view of a fluid-filled cassette of the engine mount of FIG. 1;
FIG. 5 is a top plane view of a piston member of the engine mount of FIG. 1;
FIG. 6 is a cross sectional view taken along line 6-6 of FIG. 5;
FIG. 7 is a graph showing measurements of effect of the piston member of the engine mount of FIG. 1;
FIG. 8 is a vertical cross sectional view of an automotive engine mount according to a second embodiment of the present invention;
FIG. 9 is a top plane view of a piston member of the engine mount of FIG. 8;
FIG. 10 is a cross sectional view taken along line 10-10 of FIG. 9;
FIG. 11 is a graph showing measurements of effect of the piston member of the engine mount of FIG. 8; and
FIG. 12 is a cross sectional view showing another example of a piston member employable in the present invention.

### DETAILED DESCRIPTION OF PREFERRED EMBODIMENTS

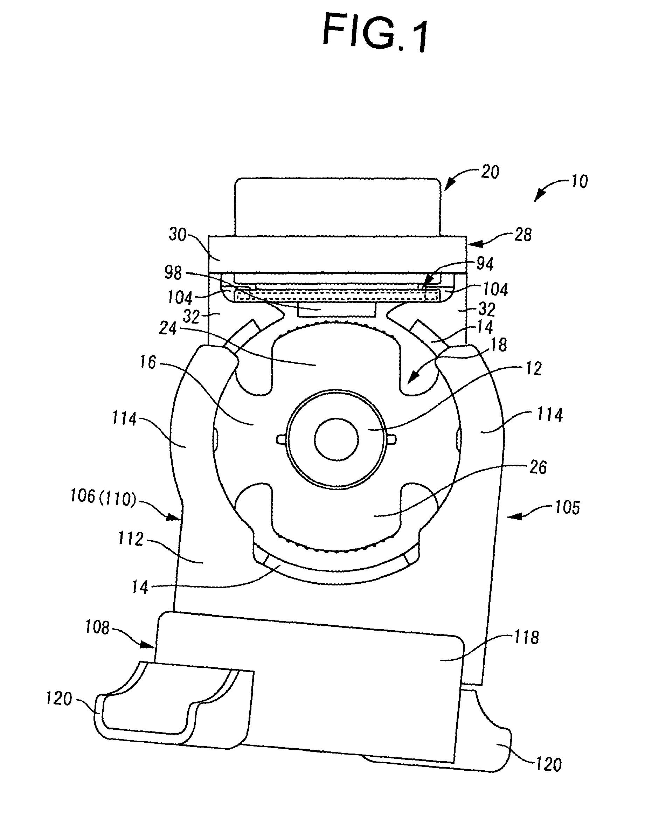

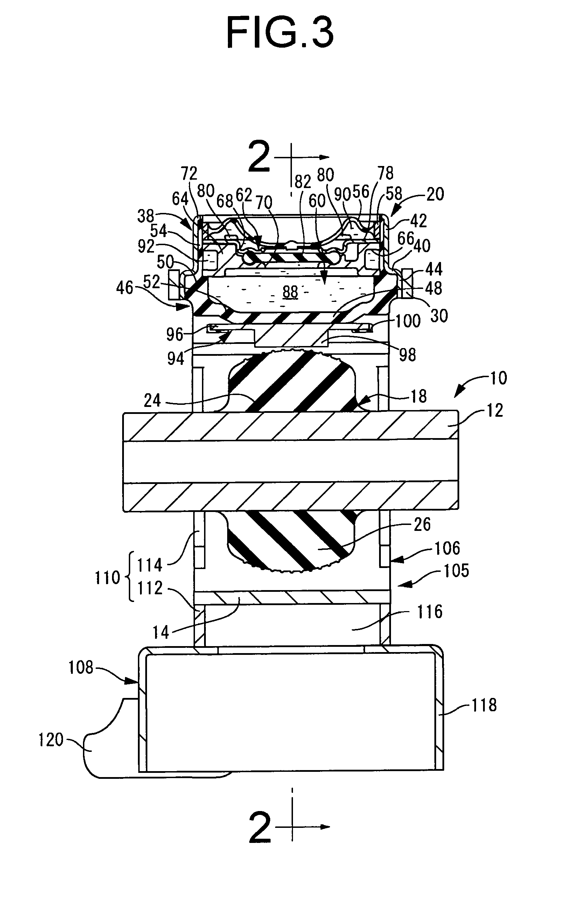

Referring first to FIGS. 1 to 3, there is depicted an automotive engine mount 10 as a first embodiment of the vibration damping device according to the invention. The engine mount 10 includes a main mount unit 18 having an inner shaft member 12 of metal as the first mounting member, an outer tubular member 14 of metal as the second mounting member (outer tubular member) connected to one another by a main rubber elastic body 16, and as the fluid-filled unit, a fluid-filled cassette 20 for attachment to the main mount unit 18. The inner shaft member 12 is mounted on the power unit (not shown) constituting one component of a vibration transmission system, while the outer tubular member 14 is mounted on the vehicle body (not shown) constituting the other component of the vibration transmission system, to install the engine mount 10 between the power unit and the vehicle body and thereby providing vibration damped support of the power unit on the vehicle body. In the following description, the vertical direction shall refer as a general rule to the vertical in FIG. 1 unless indicated otherwise.

To describe in detail, the inner shaft member 12 is a highly rigid component made of iron, aluminum alloy, or other metal, having generally round tubular shape with a thick wall and small diameter. A mounting bolt (not shown) is passed through the center hole of the inner shaft member 12, and the mounting bolt is then screwed or otherwise attached to a component (not shown) targeted for damping and situated on the power unit side, thereby fixedly mounting the inner shaft member 12 onto the power unit side.

Meanwhile, like the inner shaft member 12, the outer tubular member 14 is a highly rigid component made of iron, aluminum alloy, or other metal having generally round tubular shape with a thin wall and large diameter overall. As the open window, a cutout portion 22 is formed in a portion of the perimeter of the outer tubular member 14. The outer tubular member 14 of this embodiment is thereby divided in the circumferential direction at part of its perimeter, giving it a generally unchanging "C" shaped cross section extending in the axial direction. A bracket 105, discussed later, is attached to the outer tubular member 14. By fixing the bracket 105 onto the vehicle body (not shown) which is the other component of the vibration transmission system, the outer tubular member 14 is fixedly mounted onto the vehicle body side via the bracket 105.

The inner shaft member 12 and the outer tubular member 14 are positioned with the inner shaft member 12 and the outer tubular member 14 aligned on approximately the same center axis, with the outer tubular member 14 encircling the inner shaft member 12 to the outside. The inner shaft member 12 and the outer tubular member 14 are elastically connected together by the main rubber elastic body 16 disposed diametrically between them.

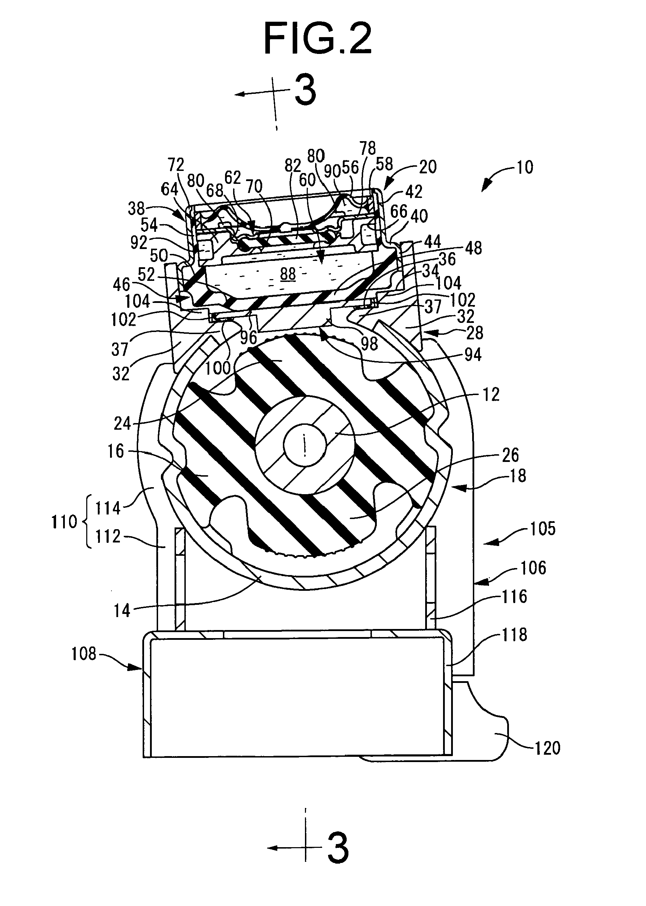

The main rubber elastic body 16 is disposed so as to extend in a diametrical direction (in FIG. 2, generally the left-right direction) between the diametrically opposed faces of the inner shaft member 12 and the outer tubular member 14. The main rubber elastic body 16 in this embodiment gradually increases in wall thickness in the circumferential direction towards the outside peripheral side, in the sections thereof situated to either side of the inner shaft member 12 in a diametrical direction. The inner shaft member 12 is vulcanization bonded to the center section of the main rubber elastic body 16 while the outer tubular member 14 is vulcanization bonded to the outside peripheral face of the main rubber elastic body 16, so that the inner shaft member 12 and the outer tubular member 14 are connected to each other in the diametrical direction by the main rubber elastic body 16.

The main rubber elastic body 16 in this embodiment includes an elastic contacting portion 24 integrally formed so as to project upward in FIG. 2 in a diametrical direction (which is also the principal vibration input direction) orthogonal to the linking direction of the inner shaft member 12 and the outer tubular member 14 by the main rubber elastic body 16 (in FIG. 2, generally the left-right direction); and an elastic stopper 26 integrally formed extending downward in FIG. 2.

The elastic contacting portion 24 is formed by a rubber elastic body having generally oblong block shape, and in this embodiment is integrally formed with the main rubber elastic body 16. The elastic contacting portion 24 projects from the inner shaft member 12 side towards the section at the perimeter of the outer tubular member 14 where the cutout portion 22 has been formed, and in this embodiment projects out at a slight incline with respect to the vertical direction. The elastic contacting portion 24 in this embodiment has a multitude of small projections of semispherical shape integrally formed at its projecting distal edge face.

Meanwhile, the elastic stopper 26 is defined by a rubber elastic body having generally oblong block shape, and in this embodiment is integrally formed with the main rubber elastic body 16. In this embodiment, the elastic stopper 26 projects from the inner shaft member 12 side towards the outer tubular member 14 between the opposed faces of the inner shaft member 12 and the outer tubular member 14, and has a projecting distal edge face defined by an arcuate curving face that curves along the curved inside peripheral face of the outer tubular member 14. Furthermore, the elastic stopper 26 projects out at a slight incline downward from the inner shaft member 12 side, and is positioned spaced apart by a prescribed distance to the inner peripheral side from the outer tubular member 14. In this embodiment, the elastic contacting portion 24 and the elastic stopper 26 project in mutually opposite directions to either side of the inner shaft member 12. The elastic stopper 26 in this embodiment has a multitude of small projections of semispherical shape integrally formed at its projecting distal edge face.

A cassette support fitting 28 serving as a fixing member is affixed to the outer tubular member 14. The cassette support fitting 28 is formed of metal material such as steel or aluminum alloy, and includes an attachment cylinder portion 30 and a pair of mounting legs 32, 32 integrally disposed at the axial lower end of the attachment cylinder portion 30 at opposed locations in the diametrical direction of the attachment cylinder portion 30. The pair of mounting legs 32, 32 each have an upper stepped face 34 and a lower stepped face 36 formed on the side thereof that faces towards the other mounting leg 32. In each of the mounting legs 32, the face of the section located above the upper stepped face 34 and situated on the side facing towards the other mounting leg 32 is coplanar with the inside peripheral face of the attachment cylinder portion 30 and connects smoothly to the inside peripheral face of the attachment cylinder portion 30. Additionally, in each of the mounting legs 32, the face of the section located between the upper stepped face 34 and the lower stepped face 36 and situated on the side that faces towards the other mounting leg 32 is an arcuate curving face that corresponds to the outside peripheral face of the plate portion 96 of the piston member 94, discussed later. The lower end portion of each of the mounting legs 32 has an arcuate curving face corresponding in shape to the outside peripheral face of the outer tubular member 14; in this embodiment in particular, a catch piece 37 for engaging the cutout portion 22 is formed at the lower end portion of each mounting leg 32 on the side thereof that faces the other mounting leg 32.

The cassette support fitting 28 having the above structure is positioned with the catch piece 37 of each of the mounting legs 32 engaged in the cutout portion 22, and with the lower edge faces of the mounting legs 32 juxtaposed against the outside peripheral face of the outer tubular member 14 so as to bridge the cutout portion 22, and in this state the mounting legs 32 are fixed to the outer tubular member 14 by being affixed to the outer tubular member 14 with welds or the like.

With the cassette support fitting 28 affixed to the outer tubular member 14 in this way, the elastic contacting portion 24 will be positioned on the center axis of the cassette support fitting 28, with the elastic contacting portion 24 which has been integrally formed with the main rubber elastic body 16 lying exposed to the outside through the cutout portion 22 that has been formed in the outer tubular member 14, and the center hole of the attachment cylinder portion 30 in the cassette support fitting 28. In this embodiment, as depicted in FIG. 1, the cassette support fitting 28 is mounted on the outer tubular member 14 while inclined slightly at prescribed angle with respect to the vertical.

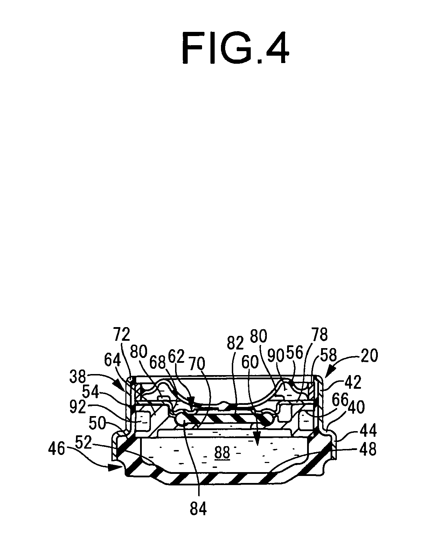

The fluid-filled cassette 20, which is constituted as a separate element from the main mount unit 18, is mounted onto the cassette support fitting 28. As depicted in FIG. 4, the fluid-filled cassette 20 has a housing fitting 38 as the tubular housing. The housing fitting 38 is made of highly rigid metal material, and has a round tubular shape with a thin wall and large diameter. In this embodiment in particular, the housing fitting 38 has a stepped tubular shape with a stepped portion 40 formed in its axially medial section, with a small-diameter portion 42 situated to the upper side of the stepped portion 40 and a large-diameter portion 44 situated to the lower side of the stepped portion 40.

A rubber elastic wall 46 is attached to the lower opening of the housing fitting 38. The rubber elastic wall 46 is a rubber elastic body with a bottomed round tubular shape overall and includes a base wall portion 48 and a tube wall portion 50. The base wall portion 48 has a circular disk shape overall provided in its medial section in the diametrical direction with a tapered portion 52 that gradually flares in diameter towards one side in the axial direction (the opening side of the rubber elastic wall 46), with the center section lying towards the inner diameter side from the tapered portion 52 being positioned axially below the outside peripheral section lying towards the outer diameter side from the tapered portion 52.

The rubber elastic wall 46 is constituted as a separate element from the main rubber elastic body 16. In this embodiment, the main rubber elastic body 16 and the rubber elastic wall 46 are fabricated from rubber materials of differing composition selected according to the performance required of each individual component (load bearing capability, resistance to corrosion by the sealed fluid, discussed later, etc.).

The housing fitting 38 is vulcanization bonded to the tube wall portion 50 of the rubber elastic wall 46 having the structure described above. In this embodiment in particular, the tube wall portion 50 of the rubber elastic wall 46 is vulcanization bonded to the housing fitting 38, with the upper edge face of the tube wall portion 50 of the rubber elastic wall 46 juxtaposed against the stepped portion 40 of the housing fitting 38 and with the outside peripheral face of the tube wall portion 50 of the rubber elastic wall 46 juxtaposed against the large-diameter portion 44 of the housing fitting 38. The lower opening of the housing fitting 38 is thereby closed off fluid-tightly by the rubber elastic wall 46. That is, in this embodiment, the rubber elastic wall 46 is constituted as an integrally vulcanization molded component which incorporates the housing fitting 38. Also, in this embodiment, the upper end section of the tube wall portion 50 of the rubber elastic wall 46 extends as far as the inside peripheral face of the small-diameter portion 42 of the housing fitting 38 so that the inside peripheral face of the small-diameter portion 42 of the housing fitting 38 is covered in its entirety by a rubber seal layer 54 that has been integrally formed with the rubber elastic wall 46.

As the flexible film, a diaphragm 56 is attached to the upper opening of the housing fitting 38. The diaphragm 56 is formed of a rubber film of thin circular disk shape with ample slack in a wavy pattern that allows it to deform easily. A tubular fastener fitting 58 is vulcanization bonded to the outside peripheral edge part of the diaphragm 56. The center hole of the fastener fitting 58 is thereby closed off fluid-tightly by the diaphragm 56. That is, in this embodiment the diaphragm 56 is constituted as an integrally vulcanization molded component which incorporates the fastener fitting 58.

The diaphragm 56 is fixedly attached to the housing fitting 38 by inserting and positioning the fastener fitting 58 that has been vulcanization bonded to its outside peripheral edge part into the upper end of the housing fitting 38, and subjecting the housing fitting 38 to a diameter reduction process such as 360-degree radial compression or drawings using eight dies disposed around the housing fitting 38, in order to affix the fastener fitting 58 to the housing fitting 38.

With the diaphragm 56 attached to the housing fitting 38, the fastener fitting 58 will be disposed in intimate contact with the housing fitting 38 via the rubber seal layer 54, whereby the opening at one axial end (in FIG. 4, the lower end) of the housing fitting 38 will be closed off fluid-tightly by the rubber elastic wall 46 while the opening at the other end (in FIG. 4, the upper end) will be closed off fluid-tightly by the diaphragm 56. By way of the fluid chamber sealed off from the outside, a fluid-filled zone 60 will be formed thereby to the inside peripheral side of the housing fitting 38 between the opposed faces of the rubber elastic wall 46 and the diaphragm 56. This fluid-filled zone 60 will be filled with a non-compressible fluid, for example, water, an alkylene glycol, a polyalkylene glycol, silicone oil, or a mixture thereof. While no particular limitation is imposed on the sealed fluid, order to effectively achieve vibration damping action based on flow action such as resonance action of the fluid through an orifice passage 92 (discussed later) it will be preferable to use a low-viscosity fluid having viscosity of 0.1 Pa •s or lower. Filling with the fluid can be accomplished advantageously by carrying out assembly of the diaphragm 56 and a partition member 62 (discussed later) with the housing fitting 38 while these components are submerged in the non-compressible fluid.

The partition member 62 is housed within the fluid-filled zone 60. This partition member 62 has a thick circular disk shape overall and includes a partition member main body 64. The partition member main body 64 is made of high rigidity material of thick circular disk shape, e.g., in this embodiment, it is made of hard resin material. A peripheral groove 66 is formed extending in the circumferential direction at the outside peripheral edge of the partition member main body 64. The peripheral groove 66 opens onto the outside peripheral face of the partition member main body 64, and extends a prescribed length in the circumferential direction.

A large-diameter recess 68 is formed in the diametrical center section of the partition member main body 64. The large-diameter recess 68 is a shallow-bottomed circular recess which opens upward at the center section of the partition member main body 64. A through-hole 70 is formed in the center of the base wall of the large-diameter recess 68.

A retainer fitting 78 is attached to the partition member main body 64 so as to be juxtaposed against its upper end face. The retainer fitting 78 has a thin, generally annular plate shape and is preferably produced by press working of sheet metal, for example. The retainer fitting 78 has a stepped annular plate shape stepped in the diametrically medial section, with the inward side of the step being positioned below the outward side. Catch holes (not shown) are formed at several locations along the perimeter, and the retainer fitting 78 is affixed juxtaposed against the partition member main body 64 through insertion and engagement of catch hooks 80 that project from the upper end face of the partition member main body 64.

A moveable rubber film 82 is juxtaposed against the bottom face of the large-diameter recess 68. The moveable rubber film 82 is made of a rubber elastomer and has generally circular disk shape. A catch portion 84 of generally unchanging circular cross section is integrally formed at the outside peripheral edge of the moveable rubber film 82, so that the moveable rubber film 82 is thicker at its outside peripheral edge than at its center section. The outside peripheral section of the moveable rubber film 82 is juxtaposed against the bottom face of the large-diameter recess 68 and is clasped between the bottom face and the inside peripheral section of the retainer fitting 78, thereby attaching the moveable rubber film 82 to the partition member main body 64. The partition member 62 of this embodiment, which includes the moveable rubber film 82, is constituted thereby.

The partition member 62 having the above structure is slipped into the housing fitting 38 and positioned in the axially medial section of the housing fitting 38, then affixed to the housing fitting 38 by subjecting the housing fitting 38 to a diameter reduction process such as 360-degree radial compression. The fastener fitting 58 which was vulcanization bonded to the diaphragm 56 is positioned in abutment from below against a swaging portion 72 provided at the upper end of the housing fitting 38, and the partition member 62 is sandwiched in the axial direction between the tube wall portion 50 of the rubber elastic wall 46 and the fastener fitting 58 so as to position and fasten the partition member 62 and the fastener fitting 58 in the axial direction between the tube wall portion 50 and the swaging portion 72.

The rubber seal layer 54 is disposed between the partition member 62 and the small-diameter portion 42 of the housing fitting 38. The outside peripheral face of the partition member 62 is juxtaposed fluid-tightly against the inside peripheral face of the small-diameter portion 42 of the housing fitting 38 via the intervening rubber seal layer 54. The fluid-filled zone 60 defined to the inside peripheral side of the housing fitting 38 between the rubber elastic wall 46 and the diaphragm 56 is thereby bifurcated into upper and lower parts by the partition member 62, thereby forming by way of a primary fluid chamber to one side of the partition member 62 (in FIG. 2, the lower side) a pressure receiving chamber 88 whose wall is partly defined by the rubber elastic wall 46 and that gives rise to pressure fluctuations at times of vibration input, and forming by way of a secondary fluid chamber to the other side of the partition member 62 (in FIG. 2, the upper side) an equilibrium chamber 90 whose wall is partly defined by the diaphragm 56 and which readily allows changes in volume.

Through fluid-tight juxtaposition of the outside peripheral face of the partition member 62 against the inside peripheral face of the housing fitting 38, the opening of the peripheral groove 66 which has been disposed opening onto the outside peripheral face of the partition member 62 will now be covered fluid-tightly by the housing fitting 38. A tunnel-like passage that utilizing the peripheral groove 66 extends in the circumferential direction will be formed thereby. The tunnel-like passage communicates at a first end to the pressure receiving chamber 88 through a communication hole (not shown) and communicates at its other end to the equilibrium chamber 90 through a communication hole (not shown). The orifice passage 92 formed thereby extends for a prescribed length in the circumferential direction, and the pressure receiving chamber 88 and the equilibrium chamber 90 communicate with each other through it.

In the embodiment, the orifice passage 92 is tuned to a low frequency band of about 10 Hz to produce effective vibration damping effect against low-frequency, large-amplitude vibration such as engine shake. The tuning frequency of the orifice passage 92 can be established through appropriate adjustment of passage length, passage cross sectional area, etc. At higher frequencies than the tuning frequency band of the orifice passage 92 flow resistance of the orifice passage 92 will rise markedly and the orifice passage 92 will become substantially obstructed, in which event the pressure fluctuations of the pressure receiving chamber 88 will be absorbed on the basis of elastic deformation of the moveable rubber film 82, thereby avoiding development of very high dynamic spring and affording good vibration damping action of vibration in the high frequency range.

The fluid-filled cassette 20 having a structure like that described above is mounted onto the cassette support fitting 28 which has been affixed to the outer tubular member 14 of the main mount unit 18 and is attached thereby to the outer tubular member 14, and hence to the main mount unit 18. To describe in more detail, the housing fitting 38 of the fluid-filled cassette 20 is affixed in a force fit to the cassette support fitting 28 so that the fluid-filled cassette 20 is attached fitting into the cassette support fitting 28 and affixed to the outer tubular member 14. As will be clear from the above description, in this embodiment, the cassette support fitting 28 constitutes a fixing member of the outer tubular member 14.

Here, with the fluid-filled cassette 20 installed on the main mount unit 18, the base wall portion 48 of the rubber elastic wall 46 will be positioned at a location in opposition to the elastic contacting portion 24 that projects out from the inner shaft member 12, through the cutout portion 22 which has been formed in the outer tubular member 14. In other words, the rubber elastic wall 46 will be positioned in opposition to the inner shaft member 12 which defines the contacting member, to the other side of the elastic contacting portion 24 therefrom.

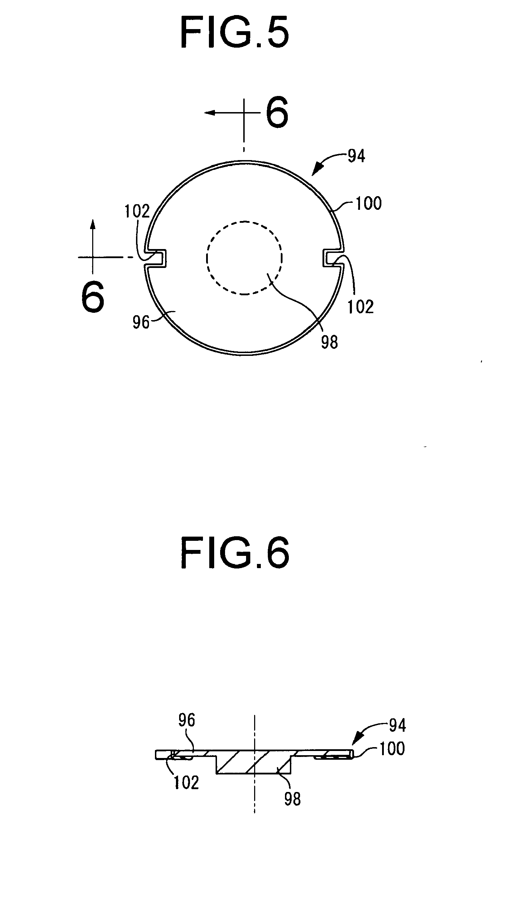

A piston member 94 is disposed between the rubber elastic wall 46 and the elastic contacting portion 24. The piston member 94 is constituted as a separate element nonattached to the rubber elastic wall 46 and the elastic contacting portion 24. The piston member 94 is made of rigid material such as steel, aluminum, or hard synthetic resin; as depicted in FIG. 5 and FIG. 6, in this embodiment it includes a plate portion 96 of circular disk shape, with an impinging projection 98 of circular block contours projecting to the other side (the lower side) in the direction of thickness integrally formed at the center section of the plate portion 96. In this embodiment in particular, the outside diameter dimension of the plate portion 96 of the piston member 94 is greater than the outside diameter dimension of the center section of the base wall portion 48 of the rubber elastic wall 46 (the section situated diametrically inward from the tapered portion 52). Also, in this embodiment, the plate portion 96 is provided with a rubber sheath 100 that covers the outside peripheral edge part of its lower end face (the face at which the impinging projection 98 projects) and its outside peripheral face.

The piston member 94 having the structure described above is positioned with the plate portion 96 juxtaposed against the lower stepped faces 36 respectively provided to the pair of mounting legs 32, 32 of the cassette support fitting 28 via the intervening rubber sheath 100, and is attached to the cassette support fitting 28 so that the impinging projection 98 projects downward between the pair of mounting legs 32, 32. That is, the piston member 94 is displaceable relative to the inner shaft member 12.

In the embodiment, a pair of positioning notches 102 are formed in the outside peripheral edge part of the plate portion 96 of the piston member 94, at locations facing in a diametrical direction; and a pair of positioning projections 104, 104 are formed at facing locations in the axis-perpendicular direction on the lower stepped faces 36, 36 that have been respectively formed on the pair of mounting legs 32, 32 of the cassette support fitting 28. With the piston member 94 attached to the cassette support fitting 28 in the above manner, the positioning projections 104, 104 of the cassette support fitting 28 are then positioned within the positioning notches 102, 102 of the piston member 94. The piston member 94 is thereby positioned in the circumferential direction with respect to the cassette support fitting 28.

In the embodiment, the height dimension of the positioning projections 104, 104 is greater then the displacement distance of the piston member 94. As a result, stable displacement of the piston member 94 in the axial direction will be achieved through the guiding action afforded by the positioning projections 104, 104 and the positioning notches 102, 102. That is, in this embodiment, the positioning projections 104, 104 and the positioning notches 102, 102 constitute a guide mechanism for regulating the direction of displacement of the piston member 94.

Further, with the piston member 94 attached to the cassette support fitting 28 in the above manner, the center section of the base wall portion 48 of the rubber elastic wall 46 will be positioned in nonadhesive abutment against the upper face of the plate portion 96 of the piston member 94. In this embodiment in particular, with the center section of the base wall portion 48 in a state of slight displacement axially upward, i.e. with the base wall portion 48 a state of slight elastic deformation axially upward, the plate portion 96 of the piston member 94 will be disposed abutting the center section of the base wall portion 48 of the rubber elastic wall 46. In other words, in the embodiment, the rubber elastic wall 46 is positioned in abutment in a pre-compressed state against the piston member 94.

By positioning the rubber elastic wall 46 in abutment in a pre-compressed state against the piston member 94 in this way, the elastic force of the rubber elastic wall 46 (force of attempted recovery to original shape) will be exerted on the piston member 94, and the outside peripheral edge part of the plate portion 96 of the piston member 94 will be pressed against the lower stepped face 36. Specifically, in the embodiment, recovery force of the plate portion 96 attempting to return to its initial position juxtaposed against the lower stepped faces 36 of the pair of mounting legs 32, 32 of the cassette support fitting 28 will be exerted constantly on the piston member 94. As a result, it will be possible to stabilize operation of the piston member 94 and prevent unwanted rattling.

Moreover, with the piston member 94 attached to the cassette support fitting 28 in the above manner, a slight gap will form between the impinging projection 98 and the elastic contacting portion 24. That is, the piston member 94 and the elastic contacting portion 24 are nonattached.

Additionally, a bracket 105 is attached to the outer tubular member 14. This bracket 105 is a highly rigid member made of iron, aluminum alloy or other metal material, or of carbon fiber-reinforced hard synthetic resin, and includes an outer anchor portion 106 for anchoring to the outer tubular member 14, and a mounting portion 108 for mounting to the other component targeted for damping.

To describe in detail, the outer anchor portion 106 includes a pair of clasp plates 110, 110. The pair of clasp plates 110, 110 are positioned in opposition so as to extend parallel to each other; with the bracket 105 installed on the outer tubular member 14 they will be positioned in opposition clasping the outer tubular member 14 from either side in the axial direction. Further, the clasp plate 110 has a basal end portion 112 and a pair of projecting clasp portions 114, 114. The basal end portion 112 has a generally flattened plate shape, and with the bracket 105 installed on the outer tubular member 14 will extend in a direction orthogonal to the direction of the axis of the outer tubular member 14. The pair of projecting clasp portions 114, 114 are integrally formed with the basal end portion 112. The pair of projecting clasp portions 114, 114 are formed so as to project upward from either end of the basal end portion 112 in the direction of its width (in FIG. 1, the left-right direction) and have flattened contours extending in the same plane as the basal end portion 112. The projecting clasp portions 114 also curve in the vertical direction in correspondence with the curve of the outer tubular member 14 in the circumferential direction, with the distance separating the pair of projecting clasp portions 114, 114 varying along the direction of their projection.

A pair of support plates 116, 116 are provided between the opposed faces of the pair of clasp plates 110, 110. Each support plate 116 has generally oblong flattened plate shape orthogonal to the clasp plates 110 and extending in the vertical direction in FIG. 2; the pair of clasp plates 110, 110 are positioned between the basal end portions 112, 112 of the pair of clasp plates 110, 110 and interconnect the basal end portions 112, 112. In the embodiment, the pair of support plates 116, 116 are positioned in opposition a prescribed distance apart in the left-right direction in FIG. 2. By so doing, the pair of clasp plates 110, 110 are linked to each other by the pair of support plates 116, 116, forming the outer anchor portion 106 according to the embodiment.

The mounting portion 108 is attached to the outer anchor portion 106 which is composed of the pair of clasp plates 110, 110 and the pair of support plates 116, 116. The mounting portion 108 includes a base portion 118 having an inverted, generally bottomed round cylindrical shape; and mounting leg portions 120 anchored at several locations along the circumference of this base portion 118. The lower end face of the outer anchor portion 106 is then joined by welds or other means to the upper base wall of the base portion 118 to construct the bracket 105 according to the embodiment.

The outer tubular member 14 is then fitted securely into the bracket 105. Specifically, the outer tubular member 14 is slipped between the opposed faces of the pair of clasp plates 110, 110, with the outer tubular member 14 resting on the pair of support plates 116, 116 from above. The outer tubular member 14 is then anchored to the bracket 105 by welds or other means to affix the bracket 105 to the outer tubular member 14.

Using fastening bolts or the like (not shown) the mounting leg portions 120 of the bracket 105 are mounted onto the other component targeted for damping, such as a vehicle body (not shown), so that the outer tubular member 14 is mounted onto the vehicle body via the bracket 105.

When vibration is input across the inner shaft member 12 and the outer tubular member 14, the inner shaft member 12 and the outer tubular member 14 will experience relative displacement in the axis-perpendicular direction. The elastic contacting portion 24 which has been disposed projecting diametrically outward with respect to the inner shaft member 12 will thereby push the piston member 94 upwardly against the elastic force of the rubber elastic wall 46. As a result, the base wall portion 48 of the rubber elastic wall 46, which has been disposed abutting the plate portion 96 of the piston member 94, will undergo displacement relative to the housing fitting 38 giving rise to pressure fluctuations within the pressure receiving chamber 88.

Due to relative pressure fluctuations between the pressure receiving chamber 88 and the equilibrium chamber 90, the fluid will flow through the orifice passage 92 between the chambers 88, 90, and vibration damping effect will be produced on the basis of flow action of the fluid flowing through the orifice passage 92.

Specifically, when engine shake or other such vibration in a low frequency band mainly posing a problem during driving of the automobile is input across the inner shaft member 12 and the outer tubular member 14, fluid will flow between the pressure receiving chamber 88 and the equilibrium chamber 90 through the orifice passage 92 which has been tuned to the low frequency band, and vibration damping effect such as high attenuating effect will be produced effectively on the basis of flow action such as resonance action of the fluid.

In the engine mount 10 of this embodiment, when jarring vibration load is input in the axial direction of the housing fitting 38 (which is also the principal vibration input direction) causing appreciable displacement of the inner shaft member 12 with respect to the outer tubular member 14 in the approximately downward direction in FIG. 2, the elastic stopper 26 which projects downward from the inner shaft member 12 side will come into contact against the outer tubular member 14. Relative displacement of the inner shaft member 12 and the outer tubular member 14 will thereby be limited in a cushioned manner, thus preventing excessive elastic deformation of the main rubber elastic body 16, and advantageously improving the durability of the main rubber elastic body 16. In this embodiment in particular, a multitude of small projections are formed on the projecting distal edge face of the elastic stopper 26. For this reason, contact of the elastic stopper 26 and the outer tubular member 14 may take place in a cushioned manner, making it possible to reduce or avoid impaired ride comfort caused by contact of the elastic stopper 26 and the outer tubular member 14.

In the engine mount 10 of the embodiment, a gap is formed between the piston member 94 and the elastic contacting portion 24. For this reason, when jarring vibration load is input in the axial direction of the housing fitting 38 (which is also the principal vibration input direction) causing appreciable displacement of the inner shaft member 12 with respect to the outer tubular member 14 in the approximately downward direction in FIG. 2, the piston member 94 and the elastic contacting portion 24 will move apart. Appreciable drop of pressure within the pressure receiving chamber 88 will be prevented thereby, and noise and vibration attributed to air bubbles, known as cavitation, will be effectively prevented.

In the automotive engine mount 10 of this embodiment, since the rubber elastic wall 46 is pressed against the inner shaft member 12 through the agency of the piston member 94, it will be possible through appropriate modification of the shape and size of the section of the piston member 94 that comes into contact with the rubber elastic wall 46, i.e. of the plate portion 96 of the piston member 94, to modify the zone that is induced to undergo elastic deformation in the rubber elastic wall 46. It will be possible thereby to change the magnitude of the pressure fluctuations exerted on the pressure receiving chamber 88. As a result, it will be possible to change the damping characteristics based on flow action of fluid flowing through the orifice passage 92.

Consequently, with the automotive engine mount 10 of this embodiment it is possible to ensure a high degree of freedom in tuning of damping characteristics.

In particular, in the engine mount 10 of the embodiment, because the fluid-filled cassette 20 is constituted as a separate element from the main mount unit 18, a number of different fluid-filled cassettes 20 with differing vibration damping characteristics can be prepared, and by employing a fluid-filled cassette 20 selected from among these different fluid-filled cassettes 20 according to capabilities required for a particular application, it will be possible to ensure a higher degree of freedom in tuning of damping characteristics.

Moreover, in the engine mount 10 of the embodiment, because the piston member 94 is constituted as a separate element from the rubber elastic wall 46 and the main rubber elastic body 16, it will be possible to more easily manufacture the rubber elastic wall 46 and the main rubber elastic body 16, and accordingly to simplify production of the engine mount 10. Specifically, during vulcanization molding of the rubber elastic wall 46 and the main rubber elastic body 16, it will not be necessary to subject the piston member 94 to a pretreatment for vulcanization bonding or to set the piston member 94 at a specific position within the mold cavity, thus making it easier to manufacture the rubber elastic wall 46 and the main rubber elastic body 16, and hence to manufacture the engine mount 10.

Furthermore, in the engine mount 10 of the embodiment, because the piston member 94 is constituted as a separate element nonattached to the rubber elastic wall 46, the rubber elastic wall 46 will not be subjected to the action of constraint by the piston member 94 during elastic deformation of the rubber elastic wall 46 at times of input of vibration, and as a result it will be possible to enhance the durability of the rubber elastic wall 46.

Moreover, in the engine mount 10 of the embodiment, the fluid-filled cassette 20 is constituted as a separate element from the main mount unit 18; and flows of fluid are produced within the fluid-filled cassette 20 in association with relative displacement of the inner shaft member 12 and the outer tubular member 14 caused by vibration input. For this reason is it possible to separate the main rubber elastic body 16 and the fluid-filled zone 60, and to thereby ensure sufficient freedom in design of the size and shape of the main rubber elastic body 16 so as to advantageously achieve the durability and spring characteristics required of the main rubber elastic body 16, while ensuring large capacity on the part of the fluid-filled zone 60 so as to effectively produce vibration damping effect on the basis of fluid flows.

Furthermore, it will be possible irrespective of the capacity of the fluid-filled zone 60 to ensure a sufficiently large rubber volume on the part of the elastic stopper 26 that has been integrally formed with the main rubber elastic body 16. For this reason, durability of the elastic stopper 26 will be advantageously ensured, and consistent stopper action will be attained. Consequently, durability of the main rubber elastic body 16 can be enhanced.

Moreover, by attaching the separate fluid-filled cassette 20 to the main mount unit 18 without the need to ensure a large zone between the inner shaft member 12 and the outer tubular member 14 in the diametrical direction, both sufficient rubber volume of the main rubber elastic body 16 and sufficient volume of the fluid-filled zone 60 will be ensured. It will be possible thereby to increase freedom in design, without the need to enlarge the diameter of the outer tubular member 14.

Additionally, because the main rubber elastic body 16 and the rubber elastic wall 46 are constituted as separate components, the composition of the rubber material for making the main rubber elastic body 16 can be different from the composition of the rubber material for making the rubber elastic wall 46. For this reason it will be possible to concomitantly achieve at high level both the characteristics required of the main rubber elastic body 16, e.g. load bearing and attenuating capabilities, and the characteristics required of the rubber elastic wall 46, e.g. fluid resistance and fluid sealing capabilities.

Furthermore, in the engine mount 10 of the embodiment, since the direction of displacement of the piston member 94 will approximately aligned with axial direction of the cassette support fitting 28 through the guiding action afforded by the pair of positioning notches 102, 102 that have been formed at the outside peripheral edge of the plate portion 96 of the piston member 94 and by the pair of positioning projections 104, 104 that have been provided to the cassette support fitting 28, it will be possible to stabilize the direction of displacement of the piston member 94, and to stabilized the direction of the pressing force acting on the rubber elastic wall 46. As a result, it will be possible to consistently produce effective pressure fluctuations in the pressure receiving chamber 88.

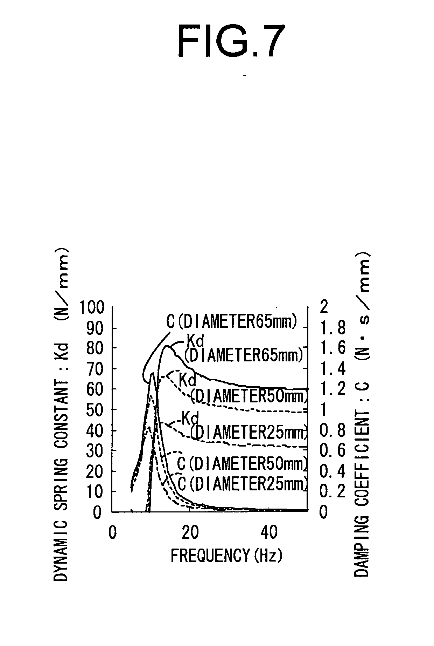

With a thick disk-shaped piston member juxtaposed along the same center axis against the fluid-filled cassette 20 employed in the engine mount 10 of the embodiment, the dynamic spring constant and damping coefficient of this system in response to application of excitation force were measured. Measurements were taken at excitation force amplitude of ±0.1 mm and ±0.5 mm. The free length of the rubber elastic wall 46 was 69.2 mm. Measurements were taken with piston members having outside diameter dimensions of 25 mm, 50 mm, and 65 mm. The center section of the base wall portion 48 of the rubber elastic wall 46 had an outside diameter dimension of 20 mm, and was arranged so that the entire center section of the base wall portion 48 of the rubber elastic wall 46 underwent displacement in the axial direction by the piston member. Dynamic spring constant was measured at frequencies of 15 Hz and of 30 Hz. Results are shown in Table 1. Also, the frequency characteristics of dynamic spring constant and damping coefficient were measured through frequency sweep excitation at excitation force of ±0.1 mm amplitude. Measurements were taken with piston members having outside diameter dimensions of 40 mm and 50 mm. These results are presented in FIG. 7.

**[TABLE 1]**

| | ±0.5mm EXCITATION | | | ±0.1mm EXCITATION | | |
|---|---|---|---|---|---|---|
| | Kd(N/mm) | | C | Kd(N/mm) | | C |
| DIAMETER | 15Hz ±0.5mm | 30HZ ±0.5mm | N·s/mm | 15Hz ±0.1mm | 30Hz ±0.1mm | N·s/mm |
| 25mm | 34.0 | 28.0 | 0.58 | 41.0 | 33.0 | 0.82 |
| 50mm | 57.0 | 48.0 | 0.82 | 65.0 | 47.0 | 1.14 |
| 65mm | 69.0 | 57.0 | 0.96 | 80.0 | 63.0 | 1.35 |

As will be apparent from Table 1 and FIG. 7, larger diameter dimension of the piston member was observed to be associated with larger dynamic spring constant and damping coefficient.

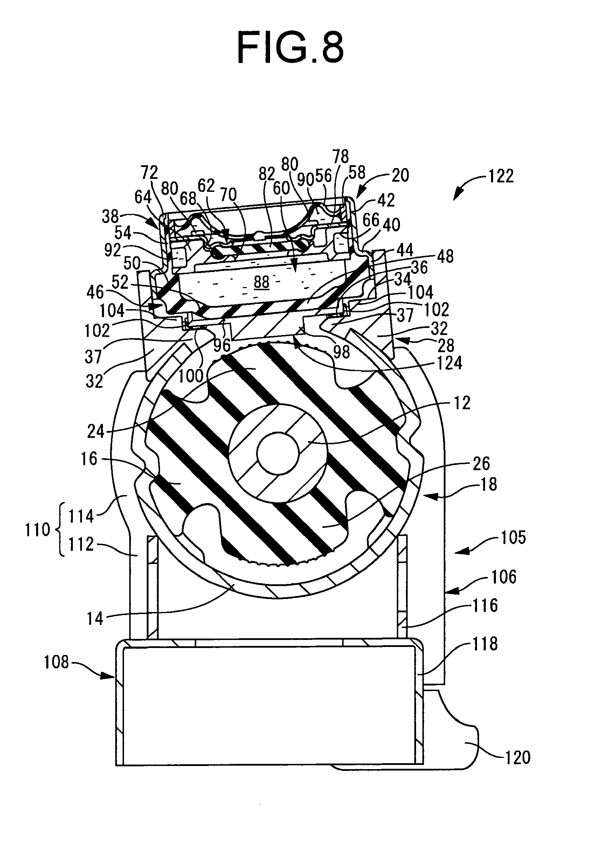

Next, an engine mount 122 according to a second embodiment of the present invention will be described with reference to FIG. 8. In the description following, elements like those in the first embodiment shall be designated by like reference numerals and will not be discussed in detail.

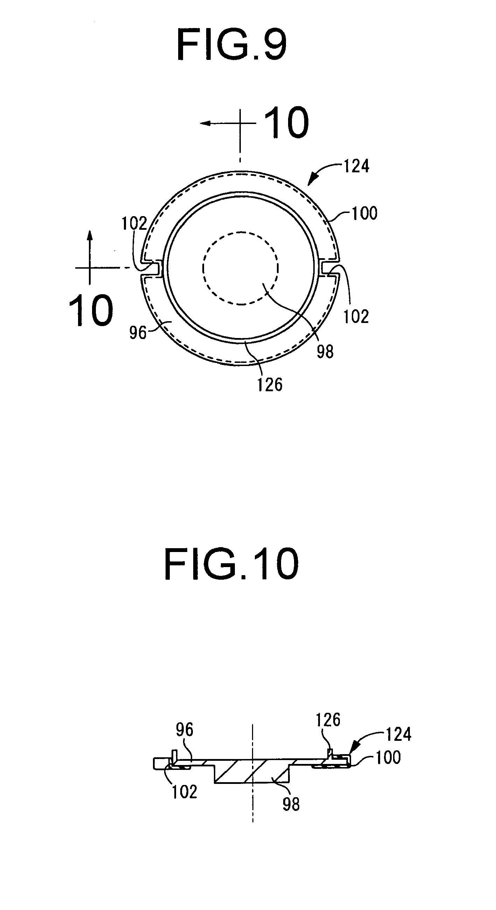

In the engine mount 122 of this embodiment, the piston member 124 has a different shape as compared with the engine mount (10) of the first embodiment. Specifically, as depicted in FIGS. 9 and 10, in the piston member 124 of this embodiment a contacting projection 126 of annular shape extends with generally unchanging cross section about the entire circumference of the upper face of the plate portion 96 (the face opposite the side from which the impinging projection 98 projects) in proximity to the outside peripheral edge. In this embodiment in particular, the contacting projection 126 is integrally formed with the plate portion 96. The contacting projection 126 of the embodiment is formed so as to extend with generally unchanging oblong cross section about the entire circumference, with its distal edge having a flat face that is parallel to the upper face of the plate portion 96. With a view to avoiding concentration of stress in the rubber elastic wall 46 during contact against the rubber elastic wall 46 and thereby improving durability of the rubber elastic wall 46, the projecting distal edge of the contacting projection 126 could also have an appropriately curved shape or a shape corresponding to the surface contour of the rubber elastic wall 46. The contacting projection 126 of the embodiment is situated to the inside peripheral side of the positioning notches 102.

The piston member 124 having the above structure is attached to the cassette support fitting 28 with the impinging projection 98 projecting outward, in the same manner as in the first embodiment.

In this embodiment as well, with the piston member 124 attached to the cassette support fitting 28 in the above manner, the rubber elastic wall 46 will be in a pre-compressed state, and the recovery force of the rubber elastic wall 46 will be exerted on the piston member 124, causing the outside peripheral edge part of the plate portion 96 of the piston member 124 to be pressed against the lower stepped face 36 of the cassette support fitting 28.

Furthermore, with the piston member 124 attached to the cassette support fitting 28, the contacting projection 126 provided to the piston member 124 will be positioned in contact about the entire circumference against the tapered portion 52 of the base wall portion 48 of the rubber elastic wall 46 or against the inside peripheral edge of the outside peripheral portion of annular plate shape situated diametrically outward from the tapered portion 52. In other words, the contacting projection 126 provided to the piston member 124 will be positioned in contact about the entire circumference against the base wall portion 48 of the rubber elastic wall 46, in proximity to the basal edge of the elastically deformable zone thereof.

Moreover, the piston member 124 and the elastic contacting portion 24 are nonattached. In this embodiment in particular, with the piston member 124 attached to the cassette support fitting 28 in the above manner, a gap will form between the impinging projection 98 and the elastic contacting portion 24.

In the engine mount 122 having the above structure, since the rubber elastic wall 46 is pressed against the inner shaft member 12 through the agency of the piston member 124 it will be possible to achieve advantages analogous to those of the first embodiment.

In this regard, in this embodiment, because the contacting projection 126 of the piston member 124 presses the outside of the tapered portion 52 provided to the base wall portion 48 of the rubber elastic wall 46, it will be possible create in the rubber elastic wall 46 a larger zone of elastic deformation. As a result, it will be possible for greater pressure fluctuations to be exerted on the pressure receiving chamber 88, and for greater damping characteristics to be attained.

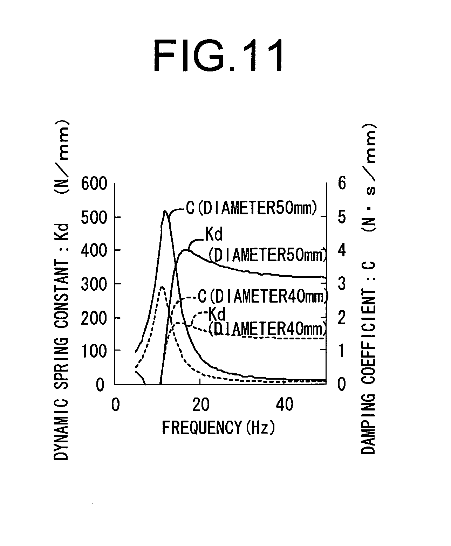

With a piston member having a projection with a cylindrical wall contour projecting to one side in the thickness direction from the outside peripheral edge of a main body section of thick disk-shape juxtaposed along the same center axis against the rubber elastic wall 46 of the fluid-filled cassette 20 employed in the engine mount 122 of this embodiment, the dynamic spring constant and damping coefficient of this system in response to application of excitation force were measured. Measurements were taken at excitation force amplitude of ±0.1 mm and ±0.5 mm. The free length of the rubber elastic wall 46 was 69.2 mm. Measurements were taken with piston members having outside diameter dimensions of 40 mm and 50 mm. Dynamic spring constant was measured at frequencies of 15 Hz and of 30 Hz. Results are shown in Table 2. Also, the frequency characteristics of dynamic spring constant and damping coefficient were measured through frequency sweep excitation at excitation force of ±0.1 mm amplitude. Here, measurements were taken with piston members having outside diameter dimensions of 40 mm and 50 mm. These results are presented in FIG. 11.

**[TABLE 2]**

| | ±0.5mm EXCITATION | | | ±0.1mm EXCITATION | | |
|---|---|---|---|---|---|---|
| | Kd(N/mm) | | C | Kd(N/mm) | | C |
| DIAMETER | 15Hz ±0.5mm | 30Hz ±0.5mm | N·s/mm | 15Hz ±0.1mm | 30Hz ±0.1mm | N·s/mm |
| 40mm | 90.0 | 90.0 | 1.62 | 185.0 | 145.0 | 2.90 |
| 50mm | 220.0 | 220.0 | 3.00 | 395.0 | 340.0 | 5.20 |

As will be apparent from Table 2 and FIG. 11, larger diameter dimension of the piston member was observed to be associated with larger dynamic spring constant and damping coefficient.

While the present invention has been shown above through a number of preferred embodiments, these are merely illustrative, and the invention should in no wise be construed as limited to specific disclosure of the embodiments herein.

For example, in the above first and second embodiments, the impinging projection 98 is not always required. Also, in the above first and second embodiments, the impinging projection 98 is positioned spaced apart from the elastic contacting portion 24 both in the engine mount 10, 122 in isolation and with the engine mount 10, 122 in the installed state. By way of other possible arrangements, the impinging projection 98 may be positioned spaced apart from the elastic contacting portion 24 in the engine mount 10, 122 in isolation, while with the engine mount 10, 122 in the installed state the impinging projection 98 and the elastic contacting portion 24 are positioned in contact under stationary load (the distributed support load of the power unit). Alternatively, the impinging projection 98 and the elastic contacting portion 24 may be positioned in contact not only with the engine mount 10, 122 in the installed state but also in the engine mount 10, 122 in isolation, in which case the elastic contacting portion 24 may be pressed against the impinging projection 98.

In the above first and second embodiments, the positioning notches 102 and the positioning projections 104 are not always required. Furthermore, while in the first and second embodiments, the positioning notches 102 and the positioning projections 104 are provided in pairs situated at opposing locations in a diametrical direction, it would be possible to instead provide three or more, or only one. Additionally, in the first and second embodiments, the positioning projections could be provided on the piston member 94, 124 side, and the positioning notches provided on the cassette support fitting 28 side.

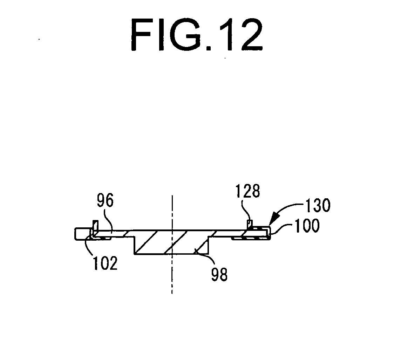

In the present invention, it is also possible to employ a piston member 130 like that depicted in FIG. 12, having as the contacting projection a rubber projection 128 that is vulcanization bonded to the plate portion 96. By so doing it will be possible to advantageously avoid damage to the base wall portion 48 of the rubber elastic wall 46 in the section thereof that is contacted by the rubber projection 128. As a result, durability of the rubber elastic wall 46 may be advantageously assured. In FIG. 12, in order to aid in understanding, elements having structure like that of the piston member 94 of the first embodiment are assigned like reference symbols to the first embodiment.

Furthermore, whereas in the preceding second embodiment the projecting distal edge of the contacting projection 126 is a flat surface of annular shape parallel to the upper face of the plate portion 96, it may instead have an arcuate curving contour that is upwardly convex. In this case it will be possible to advantageously avoid damage to the rubber elastic wall 46 in the section thereof contacted by the contacting projection 126, and to ensure durability of the rubber elastic wall 46 as a result.

In the first and second embodiments, the cutout portion 22 is formed in a portion of the perimeter of the outer tubular member 14, and the fluid-filled cassette 20 is attached to the outer tubular member 14 at the location where the cutout portion 22 has been formed. However, it would be possible to instead form multiple cutout portions 22 at the perimeter of the outer tubular member 14 and to attach fluid-filled cassettes 20 at each of the locations where these cutout portion 22 have been formed. As a specific example, there could be employed a structure in which cutout portions 22 of window shape are formed at diametrically opposing sides of the outer tubular member 14, and a pair of fluid-filled cassettes 20, 20 are attached so that the rubber elastic wall 46 slips through the pair of cutout portions 22. Excellent vibration damping effect on the basis of fluid flow action can be more effectively achieved thereby.

Moreover, whereas in the first and second embodiments, the cutout portion 22 that is formed in the outer tubular member 14 extends along the entire axial length of the outer tubular member 14 to give the outer tubular member 14 a generally "C" shaped cross section in the circumferential direction, it would be acceptable to instead form cutout portions of window shape that open onto the perimeter in the axially medial section of the outer tubular member 14, and to dispose the rubber elastic wall 46 in contact with the inner shaft member 12 through these window shaped cutout portions.

The method for attaching the fluid-filled cassette 20 to the main mount unit 18 shown in the first and second embodiments is merely exemplary and should not be construed as limiting in any way. Furthermore, whereas in the first and second embodiments, the outer tubular member 14 is attached to the vehicle body through the agency of the bracket 105 having a specific structure, the intervening bracket 105 is not always necessary for mounting onto the vehicle body side, nor is the specific structure of the bracket 105 limited to that described above.

In the first and second embodiments, the inner shaft member 12 and the piston member 94, 124 are disposed in indirect contact via the elastic contacting portion 24, the inner shaft member 12 and the piston member 94, 124 could instead be disposed in direct contact.

The first and second embodiment describe by way of example a structure for fluid-filled cassette 20 in which the pressure receiving chamber 88 and the equilibrium chamber 90 communicate with one another through the orifice passage 92. However, no particular limitation is imposed on the specific structure of the fluid-filled cassette 20 (fluid-filled unit); a structure having two or more orifice passages, or a structure having a moveable plate or the like for producing vibration damping action based on fluid pressure absorbing action in response to input of vibration in the high-frequency range would be acceptable as well. Further, there could also be employed a fluid-filled cassette 20 of switchable design furnished for example with two orifice passages and with an actuator of any of various kinds such as a pneumatic actuator or electromagnetic actuator, allowing the vibration damping characteristics to be changed by using the actuator to switch one of the orifice passages between the communicating state and the blocked state.

Moreover, while the first and second embodiments described an example of implementation of the present invention in an automotive engine mount, the present invention is applicable as well to vibration damping devices other than engine mounts. The present invention is also applicable to vibration damping devices for non-automotive applications.

Furthermore, while the first and second embodiments described a specific example of implementation of the present invention in a vibration damping device of tubular design, the present invention is of course applicable to vibration damping devices of so-called bowl design as well. Specifically, it would be possible to employ a mode having a structure wherein a first mounting member for mounting onto a first component of a vibration transmission system is anchored to a main rubber elastic body constituted as a separate element from a fluid-filled unit, to the center section at a first end in the principal vibration input direction; the fluid-filled unit is positioned at the other end face of the main rubber elastic body in the principal vibration input direction so that its rubber elastic wall is situated in opposition to the other end face of the main rubber elastic body in the principal vibration input direction; a piston member constituted as a separate element from the rubber elastic wall and the main rubber elastic body is positioned between the opposed faces of the rubber elastic wall and the main rubber elastic body; and a tubular housing of the fluid-filled unit is affixed and mounted to the outside peripheral wall of the main rubber elastic body whereby a second mounting member for mounting on the other component of the vibration transmission system is constituted to include the tubular housing. In this case, the piston member are optionally be provided with projections for contacting the rubber elastic wall.

## Claims

1. A vibration damping device (10, 122) having a first mounting member (12) to be mounted to one component of a vibration transmission system, a second mounting member (14) to be mounted to another component of the vibration transmission system, and a main rubber elastic body (16) elastically connecting the first mounting member (12) and the second mounting member (14) being positioned spaced apart, the vibration damping device (10, 122) being **characterized in that**:
a fluid-filled unit (20) has a structure in which a first opening of a tubular housing (38) is closed off by a rubber elastic wall (46) while another opening of the tubular housing is closed off by a flexible film (56) thereby defining between opposing faces of the rubber elastic wall (46) and the flexible film (56) a fluid chamber that is filled with a non-compressible fluid, and in which a partition member (62) positioned within the fluid chamber and bifurcating the fluid chamber is supported on the tubular housing thereby forming to a first side of the partition member a primary fluid chamber (88) whose wall is partly defined by the rubber elastic wall (46), and forming to the other side of the partition member a secondary fluid chamber (90) whose wall is partly defined by the flexible film (56), with the primary fluid chamber (88) and the secondary fluid chamber (90) communicating with each other through an orifice passage (92), the tubular housing (38) of the fluid-filled unit (20) being anchored to a fixing member (28) of one of the first mounting member (12) and the second mounting member (14), while the rubber elastic wall (46) of the fluid-filled unit being positioned in opposition to a contacting member (24) of the other of the first mounting member (12) and the second mounting member (14);
a rigid piston member (94, 124, 130) constituted as a separate element is disposed between opposing faces of the contacting member (24) and the rubber elastic wall (46) in a nonattached state against the contacting member (24) and the rubber elastic wall (46) so as to be displaceable relative to the contacting member (24) in a direction of opposition of the contacting member (24) and the rubber elastic wall (46); and
upon input of vibration across the first mounting member (12) and the second mounting member (14), pressure fluctuations is exerted on the primary fluid chamber (88) through elastic deformation of the rubber elastic wall (46) of the fluid-filled unit (20) induced through pushing by the contacting member (24) via the piston member (94, 124, 130).

2. The vibration damping device (10, 122) according to claim 1, wherein the first mounting member (12) comprises an inner shaft member (12), the second mounting member (14) comprises an outer tubular member (14) spaced apart peripherally outward from the inner shaft member (12), the tubular housing (38) of the fluid-filled unit (20) is affixed fitting against an open window that has been formed at a perimeter of the outer tubular member (14), and the rubber elastic wall (46) of the fluid-filled unit (20) is disposed in contact with the inner shaft member (12) via the piston member (94, 124, 130) so that upon input of vibration in the axis-perpendicular direction across in the inner shaft member (12) and the outer tubular member (14), pressure fluctuations is exerted on the primary fluid chamber (88) through elastic deformation of the rubber elastic wall (46) of the fluid-filled unit (20) induced by pressing force of the inner shaft member (12) via the contacting member (24).

3. The vibration damping device (122) according to claim 1 or 2, wherein the piston member (124, 130) has a plate portion (96) of flat shape and a contacting projection (126, 128) disposed at an outside peripheral edge of the plate portion (96), with the contacting projection (126, 128) disposed in contact against the rubber elastic wall (46).

4. The vibration damping device (122) according to claim 3, wherein the plate portion (96) is formed of a metal plate, and the contacting projection (128) is formed of a rubber projection that has been vulcanization bonded to the plate portion.

5. The vibration damping device (10, 122) according to any one of claims 1-4, wherein a guide mechanism (102, 104) for regulating the direction of displacement of the piston member (94, 124, 130) is provided.

6. The vibration damping device (10, 122) according to any one of claims 1-5, wherein the fixing member (28) is formed separately from the first mounting member (12) and the second mounting member (14), and includes an attachment cylinder portion (30) and a mounting leg (32) integrally disposed at one axial end of the attachment cylinder portion (30), and wherein the fixing member (28) is affixed to one of the first mounting member (12) and the second mounting member (14) via the mounting leg (32) so that contacting member (24) is positioned on a center axis of the fixing member (28), while the fluid-filled unit (20) is mounted onto the fixing member (28).

7. The vibration damping device (10, 122) according to any one of claims 1-6, wherein with the piston member (94, 124, 130) disposed in position, the rubber elastic wall (46) is positioned in abutment in a pre-compressed state against the piston member (94, 124, 130).

8. The vibration damping device (10, 122) according to any one of claims 1-7, wherein the rubber elastic wall (46) is a bottomed round tubular shape overall and includes a base wall portion (48) of as a circular disk shape overall provided in a medial section thereof in a diametrical direction with a tapered portion (52) that gradually flares in diameter towards one side in the axial direction with a center section lying towards an inner diameter side from the tapered portion (52) being positioned axially below than an outside peripheral section lying towards an outer diameter side from the tapered portion (52).
